# EUROPEAN PATENT SPECIFICATION

(11) **EP 4 450 342 B1**
(45) Date of publication and mention of the grant of the patent: **24.12.2025**
(21) Application number: 23742797.6
(22) Date of filing: 13.01.2023
(51) Int. Cl.: E04G 21/04, B66C 23/80, B60S 9/10, B66C 23/78, B66C 23/90

(54) **CONTROL METHOD AND CONTROL DEVICE OF PUMP TRUCK SUPPORT LEGS, AND CONTROL METHOD OF PUMP TRUCK**
STEUERUNGSVERFAHREN UND STEUERUNGSVORRICHTUNG FÜR STÜTZBEINE EINES PUMPWAGENS UND STEUERUNGSVERFAHREN FÜR EINEN PUMPWAGEN
PROCÉDÉ ET DISPOSITIF DE COMMANDE DE PIEDS DE SUPPORT DE CAMION-POMPE, ET PROCÉDÉ DE COMMANDE DE CAMION-POMPE

(30) Priority: 18.01.2022 CN 202210055255
(43) Date of publication of application: 23.10.2024
(73) Proprietor: Sany Automobile Manufacturing Co., Ltd., Changsha, Hunan 410600 (CN)
(72) Inventor: TANG, Tingting, Changsha, Hunan 410600 (CN); HUANG, Zhuo, Changsha, Hunan 410600 (CN); LIU, Wei, Changsha, Hunan 410600 (CN)
(74) Representative: Murgitroyd & Company
(86) International application number: PCT/CN2023/071991
(87) International publication number: WO 2023/138482

(56) References cited:
- WO-A1-2019/021123
- WO-A1-2019/021123
- CN-A- 101 967 883
- CN-A- 102 147 959
- CN-A- 105 156 380
- CN-A- 110 863 655
- CN-A- 110 863 655
- CN-A- 112 919 339
- CN-A- 113 650 587
- CN-A- 114 475 532
- CN-U- 207 089 273
- CN-U- 212 022 603
- CN-U- 212 022 603
- JP-A- 2018 104 103
- US-A- 5 580 095

## Description

### TECHNICAL FIELD

The present application relates to the field of concrete pump trucks technologies, and in particular, to a method and a device for controlling an outrigger of a pump truck, and a method for controlling the pump truck.

### BACKGROUN

At present, when a pump truck is used for construction, in the case that a boom has been unfolded, an outrigger is not allowed to act. If the boom acts to tilt the pump truck excessive angle during construction, to ensure safety of the construction, the boom is first retracted to its primary support position, then the pump truck is leveled by the outrigger. Consequently, operation steps are cumbersome, construction flexibility is smaller, and thus construction efficiency is seriously affected.

CN110863655A discloses a horizontal control device for a pump truck, a pump truck, and a pump truck horizontal control method. The horizontal control device includes an inclination sensor, a controller, an outrigger multi-way valve, a pressure sensor, and an electromagnetic control valve. The inclination sensor is horizontally installed on an undercarriage outrigger system and is electrically connected to the controller. The controller is electrically connected to the outrigger multi-way valve. The pressure sensor is arranged on the outrigger multi-way valve to detect a working oil pressure signal. The electromagnetic control valve and the pressure sensor are electrically connected to the controller. The outrigger multi-way valve is installed on the undercarriage outrigger system. This invention enables real-time detection of horizontal inclination changes in the support frame and automatic adjustment of the inclination angle, and thereby preventing tipping during operation.

JP2018104103A discloses a tilt prevention device for a mobile crane that enhances the safety of crane operations. The tilt prevention device is a tilt prevention device for a mobile crane including: a traveling body; outriggers provided extendably and retractably on the front, rear, left, and right sides of the traveling body to support the traveling body when extended; a boom mounted on the traveling body and capable of changing its posture from a stowed position to a working position; a boom posture detection unit that detects the posture of the boom; an inclination detection unit that detects the inclination angle and inclination direction of the traveling body relative to a horizontal plane; and a control unit that stops the operation of the boom when, in a state where the outriggers are extended and grounded, the boom posture detection unit detects that the boom is in the working posture and the inclination detection unit detects that the inclination angle is equal to or greater than a predetermined angle. Another method and device for controlling an outrigger of a pump truck is known from CN 110 863 655 A.

### SUMMARY

The present invention provides a method and a device for controlling an outrigger of a pump truck, and a method for controlling a pump truck, to solve the problem that in a conventional technology, when a boom is unfolded, the outrigger is not allowed to act, resulting in flexibility of construction is smaller.

The present invention provides a method for controlling and outrigger of a pump truck according to claim 1, including: obtaining a first tilting angle of an entire pump truck after a boom is unfolded; and in a case that the first tilting angle is larger than or equal to a first preset value, obtaining a current error count, and controlling the outrigger to act based on the current error count and a comparison result between the current error count and a preset maximum allowable error count, where the preset maximum allowable error count is set according to a tilting angle of the entire pump truck when the boom departs from its primary support position and a sensor momentarily does not detect the boom, and the preset maximum allowable error count is different when the tilting angle changes; and the current error count refers to the number of errors which is set according to a current tilting angle of the entire pump truck after the boom is unfolded; and in a case that the current error count is less than the preset maximum allowable error count, controlling the outrigger to act, or, in a case that the current error count is larger than or equal to the preset maximum allowable error count, controlling the outrigger to stop.

In accordance with the method for controlling the outrigger of the pump truck provided by the present invention, the step of obtaining a current error count includes: obtaining a second tilting angle of the entire pump truck when the boom is at its primary support position, and calculating a first difference value between the first tilting angle and a second tilting angle; and in a case that the first difference value is larger than or equal to a second preset value, setting the current error count to be one.

In accordance with the method for controlling the outrigger of the pump truck provided by the present invention, after the step of, in a case that the first difference value is larger than or equal to a second preset value, setting the current error count to be one, the method further includes: obtaining a third tilting angle of the entire pump truck at a current moment; in a case that the third tilting angle is larger than the first tilting angle, setting the current error count to be: an accumulation of one plus a previous current error count; and in a case that the third tilting angle is less than or equal to the first tilting angle, setting not to count an error count.

In accordance with the method for controlling the outrigger of the pump truck provided by the present invention, the step of, in a case that the current error count is less than the preset maximum allowable error count, controlling the outrigger to act, further includes: determining the preset maximum allowable error count, where the step of determining the preset maximum allowable error count includes: obtaining a fourth tilting angle of the entire pump truck when the boom departs from its primary support position, and determining the preset maximum allowable error count based on the fourth tilting angle.

In accordance with the method for controlling the outrigger of the pump truck provided by the present invention, the determining the preset maximum allowable error count based on the fourth tilting angle comprises: in a case that the fourth tilting angle is less than a fourth preset value, the preset maximum allowable error count is set to be 3; in a case that the fourth tilting angle is larger than or equal to the fourth preset value but less than a fifth preset value, the preset maximum allowable error count is set to be 2; in a case that the fourth tilting angle is larger than or equal to the fifth preset value and less than a sixth preset value, the preset maximum allowable error count is set to be 1; and in a case that the fourth tilting angle is larger than or equal to the sixth preset value, the preset maximum allowable error count is set to be 0.

In accordance with the method for controlling the outrigger of the pump truck provided by the present invention, the fourth preset value is 1 degree, the fifth preset value is 2 degrees, and the sixth preset value is 3 degrees.

In accordance with the method for controlling the outrigger of the pump truck provided by the present invention, the first preset value is 0.5 degrees, when the first tilting angle is less than 0.5 degrees, controlling the outrigger to act, or, when the first tilting angle is larger than or equal to 0.5 degrees, obtaining the current error count, and controlling the outrigger to act based on the current error count and the comparison result between the current error count and the preset maximum allowable error count, where in the case that the current error count is less than the preset maximum allowable error count, controlling the outrigger to act, or, in the case that the current error count is larger than or equal to the preset maximum allowable error count, controlling the outrigger to stop.

In accordance with the method for controlling the outrigger of the pump truck provided by the present invention, the method further includes: in a case that the first tilting angle is less than the first preset value, controlling the outrigger to act; and the step of, in a case that the first tilting angle is less than the first preset value, controlling the outrigger to act, further includes: in a case that the third tilting angle is larger than the first tilting angle, controlling the outrigger to stop acting.

In accordance with the method for controlling the outrigger of the pump truck provided by the present invention, after the step of controlling the outrigger to stop acting the method further includes: obtaining an operation instruction, and controlling the outrigger to operate according to an emergency mode or an observation mode based on the operation instruction.

The present invention further provides a device for controlling an outrigger of a pump truck according to the above-mentioned method, according to claim 10, including: a first obtaining module, configured to obtain the first tilting angle of the entire pump truck when the boom is unfolded; a second obtaining module, configured to obtain the current error count when the first tilting angle is larger than or equal to the first preset value; and a first controlling module, configured to control the outrigger to act based on the current error count and the comparison result between the current error count and the preset maximum allowable error count, where, the preset maximum allowable error count is set according to the tilting angle of the entire pump truck when the boom departs from its primary support position and the sensor momentarily does not detect the boom, and the preset maximum allowable error count is different when the tilting angle changes; and the current error count refers to the number of errors which is set according to a current tilting angle of the entire pump truck after the boom is unfolded; and in the case that the current error count is less than the preset maximum allowable error count, controlling the outrigger to act, or, in the case that the current error count is larger than or equal to the preset maximum allowable error count, controlling the outrigger to stop.

The present application further provides a method for controlling a pump truck, including: obtaining a second tilting angle of an entire pump truck when a boom is at its primary support position, and in a case that the second tilting angle is less than a third preset value, controlling the boom to be unfolded; with the method for controlling the outrigger of the pump truck in any one of the embodiments above-mentioned, controlling the outrigger to act.

In accordance with the method for controlling the pump truck provided by the present invention, after the step of, controlling the boom to be unfolded, the method further includes obtaining a fifth tilting angle of the entire pump truck when the boom is unfolded; and calculating a second difference value between the fifth tilting angle and the second tilting angle, and in a case that the second difference value is larger than a torsion angle, controlling the boom to stop acting.

According to the method for controlling the pump truck provided by the present invention, the outrigger is controlled to act based on a comparison result between the first tilting angle and the first preset value. Consequently, the outrigger may also act within a certain range to level the entire pump truck after a boom has been unfolded, and thus flexibility of construction is improved, and construction efficiency is also improved.

### BRIEF DESCRIPTION OF THE DRAWINGS

In order to more clearly explain technical solutions of the present invention, the drawings needed in the description of embodiments will be briefly introduced below. Obviously, the drawings described below are merely some of the embodiments of the present invention. and for a person with ordinary skill in the art, other drawings may also be obtained according to the provided drawings without creative labor. The invention is defined and only limited by the appended claims.
FIG. 1 is a flow diagram of a method for controlling an outrigger of a pump truck according to the present invention.
FIG. 2 is a logic diagram of a method for controlling an outrigger of a pump truck according to the present invention.
FIG. 3 is a logic diagram for determining a current error count.
FIG. 4 is a logic diagram for determining a maximum allowable error count.
FIG. 5 is a schematic structural diagram of a device for controlling an outrigger of a pump truck according to the present invention.

### DETAILED DESCRIPTIONS OF THE EMBODIMENTS

In order to make the objectives, technical solutions and advantages of the present invention more clearly, the technical solutions of the present invention will be described thoroughly and clearly with reference to the drawings. Obviously, the described embodiments are merely a portion of the embodiments of the present invention, but not all the embodiments. Based on the embodiments of the present invention, all other embodiments obtained by a person with ordinary skill in the art without creative labor belong to the protection scope of the present invention, as long as they fall within the scope of the invention which is only defined by the appended claims.

A feature in specification and claims of the present application defined by a term "first" or "second" may explicitly or implicitly include one or more features. In the description of the present application, unless otherwise specified, a term "a plurality of" means two or more.

A method and device for controlling an outrigger of a pump truck, and a method for controlling a pump truck of the present application will be described with reference to FIG.s 1 to 5 hereinafter.

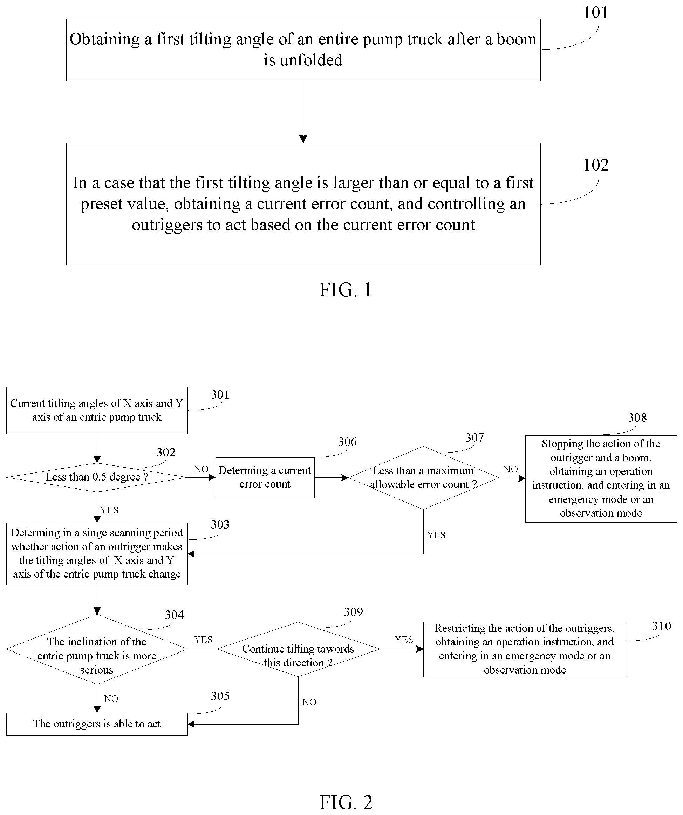

As shown in FIG. 1 and FIG. 2, in one embodiment of the present invention, the method for controlling the outrigger of the pump truck specifically includes the following steps.

Step 101: Obtaining a first tilting angle of an entire pump truck after a boom is unfolded.

Specifically, after the boom is unfolded, that is, the boom has completely departed from its primary support position, the outrigger is allowed to act under certain conditions to level the entire pump truck. At this moment, the first tilting angle of the entire pump truck relative to the level plane needs to be detected first. Specifically, the pump truck is provided with a gradienter for detecting the first tilting angle.

Step 102: In a case that the first tilting angle is larger than or equal to a first preset value, obtaining a current error count, and controlling the outrigger to act based on the current error count.

Specifically, the value of the first preset value varies depending on the type of pump truck. In the present embodiment, the first preset value is 0.5 degrees. When the first tilting angle is less than 0.5 degrees, the tilting angle of the entire pump truck is small, and the outrigger is allowed to act. After the outrigger acts, the tilting angle of the entire pump truck will change, then at this moment, in a case that the tilting angle of the entire pump truck relative to the level plane is larger than the first tilting angle, the outrigger is controlled to stop acting; or in a case that the tilting angle of the entire pump truck does not increase at this moment, that is, the tilting angle of the entire pump truck relative to the level plane is less than or equal to the first tilting angle, then the outrigger is controlled to continue acting to level the pump truck.

When the first tilting angle is larger than or equal to 0.5 degrees, at this time, the tilting angle of the entire pump truck is large, so it is necessary to determine whether the outrigger is able to continue acting according to the current error count. In a case that the current error count is less than the maximum allowable error count, the outrigger is allowed to continue acting. In a case that the current error count is larger than or equal to the maximum allowance count, the outrigger and the boom are controlled to stop acting. At this moment, in a case that it is confirmed by an operator, the outrigger may still act, then a system of the outrigger of the pump truck is controlled to operate in an emergency mode or an observation mode. Under these two modes, the outrigger may act.

According to the method for controlling the outrigger of the pump truck provided by the present invention, the outrigger is controlled to act by comparing the first tilting angle with the first preset value. Consequently, the outrigger may also act within a certain range to level the entire pump truck after the boom has been unfolded, and thus flexibility of construction is improved, and construction efficiency is also improved.

As shown in FIG. 2, in one embodiment of the present invention, the step of, in a case that the first tilting angle is larger than or equal to a first preset value, obtaining a current error count, and controlling the outrigger to act based on the current error count, further includes: in a case that the current error count is less than a preset maximum allowable error count, controlling the outrigger to act.

Specifically, when the first tilting angle is larger than or equal to the first preset value, it is necessary to determine whether the outrigger is able to continue acting based on a comparison result between the current error count and the preset maximum allowable error count. Specifically, the maximum allowable error count is an error count which is set according to the tilting angle of the entire pump truck when the boom departs from its primary support position and a sensor momentarily does not detect the boom. The corresponding maximum allowable error count is different with different tilting angle. The current error count refers to the number of errors which is set according to the current tilting angle of the entire pump truck after the boom is unfolded. In a case that the current error count is less than the maximum allowable error count, the outrigger may still act.

Further, in the present embodiment, after the step of, when the current error count is larger than or equal to a maximum allowable error count, controlling the outrigger to stop acting further includes: obtaining an operation instruction, and controlling the outrigger to operate according to an emergency mode or an observation mode based on the operation instruction.

Specifically, after the outrigger is controlled to stop acting, an operator needs to confirm whether the outrigger may still act. If, upon confirmation by the operator, the outrigger is still able to act, it will enter in the emergency mode or the observation mode.

According to the method for controlling the outrigger of the pump truck provided by the embodiment of the present invention, when the first tilting angle is equal to or larger than the first preset value, the outrigger is still able to act in a case that the current error count is less than the maximum allowable error count. Consequently, the flexibility of action of the outrigger is improved. Meanwhile, by determining whether the outrigger is able to act through a multi-layered judgment structure, the safety of the operation of the pump truck is improved.

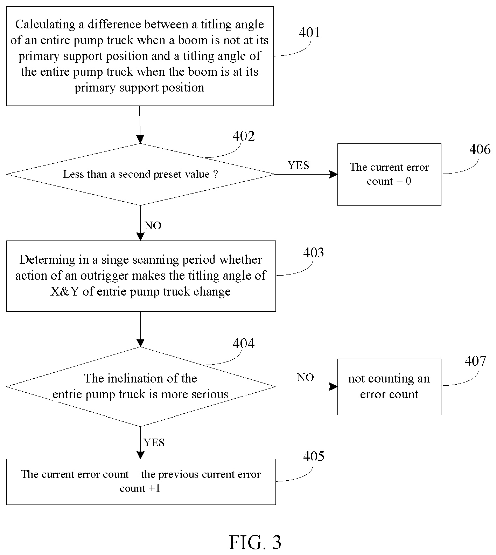

As shown in FIG. 3, in one embodiment of the present invention, the step of obtaining a current error count includes: obtaining a second tilting angle of the entire pump truck when the boom is at its primary support position, and calculating a first difference value between the first tilting angle and a second tilting angle; determining whether the first difference is less than a second preset value; in a case that the first difference value is less than the second preset value, setting the current error count to be zero; and in a case that the first difference value is larger than or equal to the second preset value, setting the current error count to be one.

Specifically, in the present embodiment, the second preset value may be set based on the specific model of the pump truck. When the boom is at its main support position, the tilting angle of the entire pump truck is the second tilting angle. After the boom is unfolded, the tilting angle of the entire pump truck is the first tilting angle. In a case that the difference between the first tilting angle and the second tilting angle is less than the second preset value, the current error count is set to be zero. In a case that the difference between the first tilting angle and the second tilting angle is larger than or equal to the second preset value, the current error count is set to be one.

As shown in FIG. 3, further, in one embodiment of the present invention, after step of, in a case that the first difference value is larger than or equal to the second preset value, setting the current error count to be one, the method further includes: obtaining a third tilting angle of the entire pump truck at a current moment, and determining whether the third tilting angle is larger than the first tilting angle; in a case that the third tilting angle is larger than the first tilting angle, setting the current error count to be: an accumulation of one plus a previous current error count; and in a case that the third tilting angle is less than or equal to the first tilting angle, setting not to count an error count.

Specifically, after the boom is unfolded, and the first difference value is equal to or larger than the second preset value, the current error count is one, and the outrigger is still allowed to act at this moment. After the outrigger acts, the tilting angle of the entire pump truck relative to the level plane changes, and the tilting angle of the entire pump truck relative to the level plane is the third tilting angle at this moment. At this point, in the case that the third tilting angle is larger than the first tilting angle, it indicates that the action of the outrigger makes the tilt of the pump truck more serious. In this case, the current error count is set to be the accumulation of one plus the previous current error count, and thus the current error count at this time is two, and determination is made based on this. In a case that the accumulated current error count is larger than or equal to the maximum allowable error count, the outrigger is controlled to stop acting; in a case that the accumulated current error count is less than the maximum allowable error count, the outrigger may continue acting. In a case that the third tilting angle is less than or equal to the first tilting angle, it indicates that the action of the outrigger has effectively leveled the pump truck. At this moment, the error count is not counted, and the outrigger may continue acting.

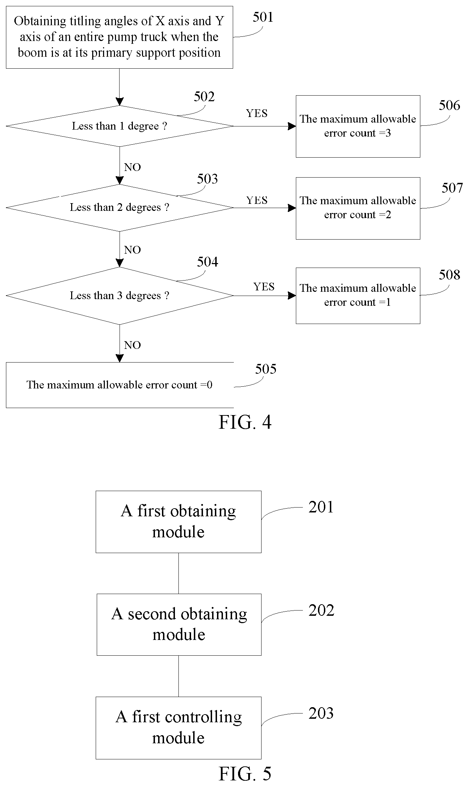

As shown in FIG. 4, further, in one embodiment of the present invention, the step of, in a case that the current error count is less than a preset maximum allowable error count, controlling the outrigger to act, further includes: determining the maximum allowable error count. The step of determining the maximum allowable error count includes: obtaining a fourth tilting angle of the entire pump truck when the boom departs from its primary support position, and determining the maximum allowable error count based on the fourth tilting angle.

Specifically, when the boom departs from its main support position, that is, at the moment the sensor does not detect the boom, the tilting angle of the entire pump truck relative to the level plane is the fourth tilting angle. This fourth tilting angle may be a variety of angles, and different tilting angles correspond to different maximum allowable error counts. When the tilting angle of the entire pump truck is large, the maximum allowable error count is less. Conversely, when the tilting angle of the entire pump truck is small, the maximum allowable error count is more.

Specifically, in a case that the fourth tilting angle is less than a fourth preset value, the maximum allowable error count is set to be 3; in a case that the fourth tilting angle is larger than or equal to the fourth preset value but less than a fifth preset value, the maximum allowable error count is set to be 2; in a case that the fourth tilting angle is larger than or equal to the fifth preset value and less than a sixth preset value, the maximum allowable error count is set to be 1; and in a case that the fourth tilting angle is larger than or equal to the sixth preset value, the maximum allowable error count is set to be 0.

Optionally, in one embodiment of the present invention, the fourth preset value is 1 degree; when the fourth tilting angle is less than 1 degree, the maximum allowable error count is 3. The fifth preset value is 2 degrees, when the fourth tilting angle is larger than or equal to 1 degree and less than 2 degrees, the maximum allowable error count is 2. The sixth preset value is 3 degrees, when the fourth tilting angle is larger than or equal to 2 degrees and less than 3 degrees, the maximum allowable error count is 1. In a case that the fourth tilting angle is larger than or equal to 3 degrees, the maximum allowable error count is 0.

For instance, when the boom departs from its main support position, it is detected that the fourth tilting angle between the entire pump truck and the level plane is 1.5 degrees, then after the boom is unfolded, when the outrigger act, the maximum allowable error count is 2. When the accumulated current error count is equal to 2, the outrigger stops acting.

As shown in FIG. 2, in one embodiment of the present invention, the method for controlling the outrigger of the pump truck further includes the following step: in a case that the first tilting angle is less than the first preset value, controlling the outrigger to act. This step further includes: in a case that the third tilting angle is larger than the first tilting angle, controlling the outrigger to stop acting.

Specifically, when the first tilting angle is less than the first preset value, the outrigger acts. At this moment, the tilting angle of the entire pump truck relative to the level plane changes. The gradienter detects the third tilting angle of the entire pump truck relative to the level plane. In a case that the third tilting angle is larger than the first tilting angle, it indicates that the action of the outrigger makes the tilting angle of the pump truck increase. In order to prevent the pump truck from side-turning over, it is necessary to control the outrigger to stop acting.

Further, in the present embodiment, after the step of, in a case that the third tilting angle is larger than the first tilting angle, controlling the outrigger to stop acting, the method further includes: obtaining an operation instruction, and controlling the outrigger to operate according to an emergency mode or an observation mode based on the operation instruction.

Specifically, after the outrigger is controlled to stop acting, the operator needs to confirm whether the outrigger is still able to act. Upon confirmation by the operator, in a case that the outrigger is still able to act, it enters in the emergency mode or the observation mode. Specifically, in a case that a fault of a sensor occurs, the emergency mode is entered. Under the emergency mode, the action of the outrigger is unrestricted, but it cannot operate under this mode for a long time. In a case that there is no fault of sensor, the observation mode is entered. Under the observation mode, the action of the outrigger is unrestricted. In a case that the tilting angle of the pump truck is too large, the boom may also be controlled to act to level the entire pump truck.

It should be noted that, in the present embodiment, the fault of the sensor refers to: a sensor signal is not received, a datum detected by the sensor exceeds a limit value, or the datum detected by the sensor is wrong and the like.

According to the method for controlling the outrigger of the pump truck provided by the embodiment of the present invention, in a case that the tilting angle of the pump truck does not increase after the outrigger acts, the outrigger may still continue acting. In a case that the tilting angle of the entire pump truck increases, it will enter in the emergency mode or the observation mode after being confirmed by the operator. Under these two modes, the outrigger may still act. Consequently, the flexibility of the action of the outrigger is improved, and at the same time, whether the outrigger is able to act or not is determined through the multi-layered judgment structure, which improves the safety of the operation of the pump truck.

The device for controlling the outrigger of the pump truck provided by the present invention will be described hereinafter, and the device for controlling the outrigger of the pump truck described below and the aforementioned method for controlling the outrigger of the pump truck may be referenced correspondingly.

As shown in FIG. 5, the embodiment of the present invention further provides a device for controlling an outrigger of a pump truck, including: a first obtaining module 201, a second obtaining module 202 and a first controlling module 203. The first obtaining module 201 is configured to obtain a first tilting angle of an entire pump truck after a boom is unfolded. The second obtaining module 202 is configured to obtain a current error count when the first tilting angle is larger than or equal to a first preset value. The first controlling module 203 is configured to control the outrigger to act based on the current error count.

In one embodiment of the present invention, the device for controlling the outrigger of the pump truck also includes a second controlling module. The second controlling module is configured to control the outrigger to act when the current error count is less than a preset maximum allowable error count.

In one embodiment of the present invention, the device for controlling the outrigger of the pump truck further includes: a third obtaining module, a first calculation module and a first setting module. Specifically, the third obtaining module is configured to obtain a second tilting angle between the entire pump truck and a level plane when the boom is at its main support position. The first calculation module is configured to calculate a first difference between the first tilting angle and the second tilting angle. The first setting module is configured to set the current error count to be 1 in a case that the first difference is larger than or equal to a second preset value.

In one embodiment of the present application, the device for controlling the outrigger of the pump truck further includes: a fourth obtaining module and a second setting module. Specifically, the fourth obtaining module is configured to obtain a third tilting angle of the current entire pump truck. The second setting module is configured to set the current error count to be an accumulation of one plus a previous current error count in a case that the third tilting angle is larger than the first tilting angle, or, set not to count an error count in a case that the third tilting angle is less than or equal to the first tilting angle.

In one embodiment of the present invention, the device for controlling the outrigger of the pump truck further includes a first determining module and a fifth obtaining module. The fifth obtaining module is configured to obtain a fourth tilting angle between the entire pump truck and the level plane when the boom departs from its main support position. The second determination module is configured to determine the maximum allowable error count based on the fourth tilting angle.

**In** one embodiment of the present invention, the device for controlling the outrigger of the pump truck further includes a sixth obtaining module and a third controlling module. The sixth obtaining module is configured to obtain an operation instruction, and the third controlling module is configured to control the outrigger to act according to an emergency mode or an observation mode based on this operation instruction.

The embodiment of the present invention also provides a method for controlling a pump truck, which specifically includes the following steps: obtaining a second tilting angle of an entire pump truck when a boom is at its primary support position; and in a case that the second tilting angle is less than a third preset value, controlling the boom to be unfolded.

Specifically, when the boom is not unfolded, the outrigger may freely act to level the pump truck. When the boom needs to be unfolded, the tilting angle of the entire pump truck relative to the level plane should be detected first. **In** a case that this tilting angle is less than a preset value, the boom is allowed to be unfolded. It should be noted that, the third preset value may be set according to specific working conditions.

**In** one embodiment of the present invention, after the step of controlling the boom to be unfolded, the method further includes: obtaining a fifth tilting angle of the entire pump truck when the boom is unfolded, and calculating a second difference value between the fifth tilting angle and the second tilting angle. **In** a case that the second difference is larger than a torsion angle, the boom is to be controlled to stop acting.

Specifically, when the boom is unfolded, it is necessary to verify whether the difference between the current tilting angle of the entire pump truck and the tilting angle of the entire pump truck that the boom is at its primary support position is less than the torsion angle, and the torsion angle herein is a test limit value. **In** a case that the second difference is larger than the torsion angle, it indicates that an abnormal situation has occurred, and the boom should be controlled to stop acting.

It should be noted that, in the above-mentioned embodiments, according to the action sequence of the boom and the outrigger, the corresponding tilting angles of the entire pump truck at each moment are respectively: the second tilting angle when the boom is at its primary support position and is not unfolded; the fourth tilting angle at the moment that the boom departs from its primary support position; the fifth tilting angle during the process that the boom is unfolded; the first tilting angle after the boom is unfolded; and the third tilting angle after the boom is unfolded and the outrigger acts.

When the boom is not unfolded, the boom is not allowed to unfold in a case that tilting angle of the entire pump truck is too large. When the boom is unfolded, it is necessary to calculate the difference between the current tilting angle of the entire pump truck and the tilting angle of the entire pump truck that the boom is at its primary support position. In a case that this difference is larger than the torsion angle, the boom is controlled to stop acting. The boom is capable to be controlled to act based on the current situation, and thus safety of the construction is improved.

Further, when entering in the emergency mode or the observation mode, the action of the boom is unrestricted under the emergency mode, but it cannot operate under this mode for a long time. In a case that no fault of a sensor occurs, the observation mode is entered. Under the observation mode, the action of the outrigger action is unrestricted, and in a case that tilting angle of the entire pump truck is too large, the boom may also be controlled to act to level the pump truck.

Finally, it should be explained that the aforementioned embodiments are merely used for illustrating the technical solutions of the present invention, but not intend to limit it.

## Claims

1. A method for controlling an outrigger of a pump truck, comprising:
obtaining a first tilting angle of an entire pump truck after a boom is unfolded; and
in a case that the first tilting angle is larger than or equal to a first preset value, obtaining a current error count, and controlling the outrigger to act based on the current error count and a comparison result between the current error count and a preset maximum allowable error count, **characterized in that**, the preset maximum allowable error count is set according to a tilting angle of the entire pump truck when the boom departs from its primary support position and a sensor momentarily does not detect the boom, and the preset maximum allowable error count is different when the tilting angle changes; and the current error count refers to the number of errors which is set according to a current tilting angle of the entire pump truck after the boom is unfolded; and
in a case that the current error count is less than the preset maximum allowable error count, controlling the outrigger to act, or, in a case that the current error count is larger than or equal to the preset maximum allowable error count, controlling the outrigger to stop.

2. The method for controlling the outrigger of the pump truck according to claim 1, wherein the step of obtaining a current error count comprises:
obtaining a second tilting angle of the entire pump truck when the boom is at its primary support position, and calculating a first difference value between the first tilting angle and the second tilting angle; and
in a case that the first difference value is larger than or equal to a second preset value, setting the current error count to be one.

3. The method for controlling the outrigger of the pump truck according to claim 2, wherein after the step of, in a case that the first difference value is larger than or equal to a second preset value, setting the current error count to be one, the method further comprises:
obtaining a third tilting angle of the entire pump truck at a current moment;
in a case that the third tilting angle is larger than the first tilting angle, setting the current error count to be: an accumulation of one plus a previous current error count; and
in a case that the third tilting angle is less than or equal to the first tilting angle, setting not to count an error count.

4. The method for controlling the outrigger of the pump truck according to claim 3, wherein the step of, in a case that the current error count is less than the preset maximum allowable error count, controlling the outrigger to act, further comprises:
determining the preset maximum allowable error count,
wherein the step of determining the preset maximum allowable error count comprises:
obtaining a fourth tilting angle of the entire pump truck when the boom departs from its primary support position, and determining the preset maximum allowable error count based on the fourth tilting angle.

5. The method for controlling the outrigger of the pump truck according to claim 4, wherein the determining the preset maximum allowable error count based on the fourth tilting angle comprises:
in a case that the fourth tilting angle is less than a fourth preset value, the preset maximum allowable error count is set to be 3;
in a case that the fourth tilting angle is larger than or equal to the fourth preset value but less than a fifth preset value, the preset maximum allowable error count is set to be 2;
in a case that the fourth tilting angle is larger than or equal to the fifth preset value and less than a sixth preset value, the preset maximum allowable error count is set to be 1;
and in a case that the fourth tilting angle is larger than or equal to the sixth preset value, the preset maximum allowable error count is set to be 0.

6. The method for controlling the outrigger of the pump truck according to claim 5, wherein the fourth preset value is 1 degree, the fifth preset value is 2 degrees, and the sixth preset value is 3 degrees.

7. The method for controlling the outrigger of the pump truck according to any one of claims 1 to 6, wherein the first preset value is 0.5 degrees, when the first tilting angle is less than 0.5 degrees, controlling the outrigger to act, or, when the first tilting angle is larger than or equal to 0.5 degrees, obtaining the current error count, and controlling the outrigger to act based on the current error count and the comparison result between the current error count and the preset maximum allowable error count, wherein in the case that the current error count is less than the preset maximum allowable error count, controlling the outrigger to act, or, in the case that the current error count is larger than or equal to the preset maximum allowable error count, controlling the outrigger to stop.

8. The method for controlling the outrigger of the pump truck according to any one of claims 3 to 7, wherein the method further comprises:
in a case that the first tilting angle is less than the first preset value, controlling the outrigger to act; and
the step of, in a case that the first tilting angle is less than the first preset value, controlling the outrigger to act, further comprises:
in a case that the third tilting angle is larger than the first tilting angle, controlling the outrigger to stop acting.

9. The method for controlling the outrigger of the pump truck according to claim 8, wherein after the step of controlling the outrigger to stop acting the method further comprises:
obtaining an operation instruction, and controlling the outrigger to operate according to an emergency mode or an observation mode based on the operation instruction.

10. A device for controlling an outrigger of a pump truck according to any one of the claims 1 to 9, comprising:
a first obtaining module, configured to obtain the first tilting angle of the entire pump truck when the boom is unfolded;
a second obtaining module, configured to obtain the current error count when the first tilting angle is larger than or equal to the first preset value; and
a first controlling module, configured to control the outrigger to act based on the current error count and the comparison result between the current error count and the preset maximum allowable error count, **characterized in that**, the preset maximum allowable error count is set according to the tilting angle of the entire pump truck when the boom departs from its primary support position and the sensor momentarily does not detect the boom, and the preset maximum allowable error count is different when the tilting angle changes; and the current error count refers to the number of errors which is set according to a current tilting angle of the entire pump truck after the boom is unfolded; and
in the case that the current error count is less than the preset maximum allowable error count, controlling the outrigger to act, or, in the case that the current error count is larger than or equal to the preset maximum allowable error count, controlling the outrigger to stop.

11. A method for controlling a pump truck, comprising:
obtaining a second tilting angle of an entire pump truck when a boom is at its primary support position, and in a case that the second tilting angle is less than a third preset value, controlling the boom to be unfolded; and
with the method for controlling the outrigger of the pump truck described in any one of the claims 1 to 9, controlling the outrigger to act.

12. The method for controlling the pump truck according to claim 11, wherein after the step of, controlling the boom to be unfolded, the method further comprises:
obtaining a fifth tilting angle of the entire pump truck when the boom is unfolded; and
calculating a second difference value between the fifth tilting angle and the second tilting angle, and in a case that the second difference value is larger than a torsion angle, controlling the boom to stop acting.

## Patentansprüche

1. Ein Verfahren zum Steuern eines Abstützarms eines Pumpwagens, das Folgendes beinhaltet:
Erhalten eines ersten Kippwinkels eines gesamten Pumpwagens, nachdem ein Ausleger ausgeklappt wurde; und
in einem Fall, dass der erste Kippwinkel größer als oder gleich einem ersten voreingestellten Wert ist, Erhalten einer aktuellen Fehlerzahl und Steuern des Abstützarms, sodass er eine Aktivität ausführt, auf der Basis der aktuellen Fehlerzahl und eines Vergleichsergebnisses zwischen der aktuellen Fehlerzahl und einer voreingestellten maximal zulässigen Fehlerzahl, **dadurch gekennzeichnet, dass** die voreingestellte maximal zulässige Fehlerzahl gemäß einem Kippwinkel des gesamten Pumpwagens eingestellt wird, wenn der Ausleger seine primäre Stützposition verlässt und ein Sensor den Ausleger vorübergehend nicht detektiert, und die voreingestellte maximal zulässige Fehlerzahl unterschiedlich ist, wenn sich der Kippwinkel ändert; und sich die aktuelle Fehlerzahl auf die Anzahl von Fehlern bezieht, die gemäß einem aktuellen Kippwinkel des gesamten Pumpwagens, nachdem der Ausleger ausgeklappt wurde, eingestellt wird; und
in einem Fall, dass die aktuelle Fehlerzahl kleiner als die voreingestellte maximal zulässige Fehlerzahl ist, Steuern des Abstützarms, sodass er eine Aktivität ausführt, oder in einem Fall, dass die aktuelle Fehlerzahl größer als oder gleich der voreingestellten maximal zulässigen Fehlerzahl ist, Steuern des Abstützarms, sodass er anhält.

2. Verfahren zum Steuern des Abstützarms des Pumpwagens gemäß Anspruch 1, wobei der Schritt des Erhaltens einer aktuellen Fehlerzahl Folgendes beinhaltet:
Erhalten eines zweiten Kippwinkels des gesamten Pumpwagens, wenn sich der Ausleger in seiner primären Stützposition befindet, und Berechnen eines ersten Differenzwerts zwischen dem ersten Kippwinkel und dem zweiten Kippwinkel; und
in einem Fall, dass der erste Differenzwert größer als oder gleich einem zweiten voreingestellten Wert ist, Einstellen der aktuellen Fehlerzahl auf eins.

3. Verfahren zum Steuern des Abstützarms des Pumpwagens gemäß Anspruch 2, wobei das Verfahren nach dem Schritt des Einstellens der aktuellen Fehlerzahl auf eins in einem Fall, dass der erste Differenzwert größer als oder gleich einem zweiten voreingestellten Wert ist, ferner Folgendes beinhaltet:
Erhalten eines dritten Kippwinkels des gesamten Pumpwagens zu einem aktuellen Zeitpunkt;
in einem Fall, dass der dritte Kippwinkel größer als der erste Kippwinkel ist, Einstellen der aktuellen Fehlerzahl auf: eine Akkumulation von eins plus einer vorherigen aktuellen Fehlerzahl; und
in einem Fall, dass der dritte Kippwinkel kleiner als oder gleich dem ersten Kippwinkel ist, Einstellen, dass eine Fehlerzahl nicht gezählt wird.

4. Verfahren zum Steuern des Abstützarms des Pumpwagens gemäß Anspruch 3, wobei in einem Fall, dass die aktuelle Fehlerzahl kleiner als die voreingestellte maximal zulässige Fehlerzahl ist, der Schritt des Steuerns des Abstützarms, sodass er eine Aktivität ausführt, ferner Folgendes beinhaltet:
Bestimmen der voreingestellten maximal zulässigen Fehlerzahl,
wobei der Schritt des Bestimmens der voreingestellten maximal zulässigen Fehlerzahl Folgendes beinhaltet:
Erhalten eines vierten Kippwinkels des gesamten Pumpwagens, wenn der Ausleger seine primäre Stützposition verlässt, und Bestimmen der voreingestellten maximal zulässigen Fehlerzahl auf der Basis des vierten Kippwinkels.

5. Verfahren zum Steuern des Abstützarms des Pumpwagens gemäß Anspruch 4, wobei das Bestimmen der voreingestellten maximal zulässigen Fehlerzahl auf der Basis des vierten Kippwinkels Folgendes beinhaltet:
in einem Fall, dass der vierte Kippwinkel kleiner als ein vierter voreingestellter Wert ist, wird die voreingestellte maximal zulässige Fehlerzahl auf 3 eingestellt;
in einem Fall, dass der vierte Kippwinkel größer als oder gleich dem vierten voreingestellten Wert, aber kleiner als ein fünfter voreingestellter Wert ist, wird die voreingestellte maximal zulässige Fehlerzahl auf 2 eingestellt;
in einem Fall, dass der vierte Kippwinkel größer als oder gleich dem fünften voreingestellten Wert und kleiner als ein sechster voreingestellter Wert ist, wird die voreingestellte maximal zulässige Fehlerzahl auf 1 eingestellt;
und in einem Fall, dass der vierte Kippwinkel größer als oder gleich dem sechsten voreingestellten Wert ist, wird die voreingestellte maximal zulässige Fehlerzahl auf 0 eingestellt.

6. Verfahren zum Steuern des Abstützarms des Pumpwagens gemäß Anspruch 5, wobei der vierte voreingestellte Wert 1 Grad beträgt, der fünfte voreingestellte Wert 2 Grad beträgt und der sechste voreingestellte Wert 3 Grad beträgt.

7. Verfahren zum Steuern des Abstützarms des Pumpwagens gemäß einem der Ansprüche 1 bis 6, wobei der erste voreingestellte Wert 0,5 Grad beträgt, wenn der erste Kippwinkel kleiner als 0,5 Grad ist, Steuern des Abstützarms, sodass er eine Aktivität ausführt, oder, wenn der erste Kippwinkel größer als oder gleich 0,5 Grad ist, Erhalten der aktuellen Fehlerzahl und Steuern des Abstützarms, sodass er eine Aktivität ausführt, auf der Basis der aktuellen Fehlerzahl und des Vergleichsergebnisses zwischen der aktuellen Fehlerzahl und der voreingestellten maximal zulässigen Fehlerzahl, wobei in dem Fall, dass die aktuelle Fehlerzahl kleiner als die voreingestellte maximal zulässige Fehlerzahl ist, Steuern des Abstützarms, sodass er eine Aktivität ausführt, oder in dem Fall, dass die aktuelle Fehlerzahl größer als oder gleich der voreingestellten maximal zulässigen Fehlerzahl ist, Steuern des Abstützarms, sodass er anhält.

8. Verfahren zum Steuern des Abstützarms des Pumpwagens gemäß einem der Ansprüche 3 bis 7, wobei das Verfahren ferner Folgendes beinhaltet:
in einem Fall, dass der erste Kippwinkel kleiner als der erste voreingestellte Wert ist, Steuern des Abstützarms, sodass er eine Aktivität ausführt; und
der Schritt des Steuerns des Abstützarms, sodass er eine Aktivität ausführt, in einem Fall, dass der erste Kippwinkel kleiner als der erste voreingestellte Wert ist, ferner Folgendes beinhaltet:
in einem Fall, dass der dritte Kippwinkel größer als der erste Kippwinkel ist, Steuern des Abstützarms, sodass er eine Aktivität anhält.

9. Verfahren zum Steuern des Abstützarms des Pumpwagens gemäß Anspruch 8, wobei das Verfahren nach dem Schritt des Steuerns des Abstützarms, sodass er eine Aktivität anhält, ferner Folgendes beinhaltet:
Erhalten einer Betriebsanweisung und Steuern des Abstützarms auf der Basis der Betriebsanweisung, sodass er gemäß einem Notfallmodus oder einem Beobachtungsmodus arbeitet.

10. Eine Vorrichtung zum Steuern eines Abstützarms eines Pumpwagens gemäß einem der Ansprüche 1 bis 9, die Folgendes beinhaltet:
ein erstes Erhaltemodul, das konfiguriert ist, um den ersten Kippwinkel des gesamten Pumpwagens zu erhalten, wenn der Ausleger ausgeklappt ist;
ein zweites Erhaltemodul, das konfiguriert ist, um die aktuelle Fehlerzahl zu erhalten, wenn der erste Kippwinkel größer als oder gleich dem ersten voreingestellten Wert ist; und
ein erstes Steuermodul, das konfiguriert ist, um den Abstützarm auf der Basis der aktuellen Fehlerzahl und des Vergleichsergebnisses zwischen der aktuellen Fehlerzahl und der voreingestellten maximal zulässigen Fehlerzahl zu steuern, sodass er eine Aktivität ausführt, **dadurch gekennzeichnet, dass** die voreingestellte maximal zulässige Fehlerzahl gemäß dem Kippwinkel des gesamten Pumpwagens eingestellt wird, wenn der Ausleger seine primäre Stützposition verlässt und der Sensor den Ausleger vorübergehend nicht detektiert, und die voreingestellte maximal zulässige Fehlerzahl unterschiedlich ist, wenn sich der Kippwinkel ändert; und sich die aktuelle Fehlerzahl auf die Anzahl von Fehlern bezieht, die gemäß einem aktuellen Kippwinkel des gesamten Pumpwagens eingestellt wird, nachdem der Ausleger ausgeklappt wurde; und
in dem Fall, dass die aktuelle Fehlerzahl kleiner als die voreingestellte maximal zulässige Fehlerzahl ist, Steuern des Abstützarms, sodass er eine Aktivität ausführt, oder in dem Fall, dass die aktuelle Fehlerzahl größer als oder gleich der voreingestellten maximal zulässigen Fehlerzahl ist, Steuern des Abstützarms, sodass er anhält.

11. Ein Verfahren zum Steuern eines Pumpwagens, das Folgendes beinhaltet:
Erhalten eines zweiten Kippwinkels eines gesamten Pumpwagens, wenn sich ein Ausleger in seiner primären Stützposition befindet, und in einem Fall, dass der zweite Kippwinkel kleiner als ein dritter voreingestellter Wert ist, Steuern des Auslegers, sodass er ausgeklappt wird; und
mit dem Verfahren zum Steuern des Abstützarms des Pumpwagens, das in einem der Ansprüche 1 bis 9 beschrieben ist, Steuern des Abstützarms, sodass er eine Aktivität ausführt.

12. Verfahren zum Steuern des Pumpwagens gemäß Anspruch 11, wobei das Verfahren nach dem Schritt des Steuerns des Auslegers, sodass er ausgeklappt wird, ferner Folgendes beinhaltet:
Erhalten eines fünften Kippwinkels des gesamten Pumpwagens, wenn der Ausleger ausgeklappt ist; und
Berechnen eines zweiten Differenzwerts zwischen dem fünften Kippwinkel und dem zweiten Kippwinkel, und in einem Fall, dass der zweite Differenzwert größer als ein Torsionswinkel ist, Steuern des Auslegers, sodass er eine Aktivität anhält.

## Revendications

1. Un procédé de commande d'un stabilisateur d'un camion-pompe, comprenant :
l'obtention d'un premier angle d'inclinaison d'un camion-pompe entier après qu'une flèche a été dépliée ; et
dans un cas où le premier angle d'inclinaison est supérieur ou égal à une première valeur préréglée, l'obtention d'un compte d'erreurs en cours, et la commande du stabilisateur pour qu'il agisse sur la base du compte d'erreurs en cours et d'un résultat de comparaison entre le compte d'erreurs en cours et un compte d'erreurs admissible maximal préréglé, **caractérisé en ce que**, le compte d'erreurs admissible maximal préréglé est réglé selon un angle d'inclinaison du camion-pompe entier lorsque la flèche s'éloigne de sa position de support primaire et qu'un capteur ne détecte momentanément pas la flèche, et le compte d'erreurs admissible maximal préréglé est différent lorsque l'angle d'inclinaison change ; et le compte d'erreurs en cours fait référence au nombre d'erreurs qui est réglé selon un angle d'inclinaison en cours du camion-pompe entier après que la flèche a été dépliée ; et
dans un cas où le compte d'erreurs en cours est inférieur au compte d'erreurs admissible maximal préréglé, la commande du stabilisateur pour qu'il agisse, ou, dans un cas où le compte d'erreurs en cours est supérieur ou égal au compte d'erreurs admissible maximal préréglé, la commande du stabilisateur pour qu'il s'arrête.

2. Le procédé de commande du stabilisateur du camion-pompe selon la revendication 1, dans lequel l'étape d'obtention d'un compte d'erreurs en cours comprend :
l'obtention d'un deuxième angle d'inclinaison du camion-pompe entier lorsque la flèche est à sa position de support primaire, et le calcul d'une première valeur de différence entre le premier angle d'inclinaison et le deuxième angle d'inclinaison ; et
dans un cas où la première valeur de différence est supérieure ou égale à une deuxième valeur préréglée, le réglage du compte d'erreurs en cours pour qu'il soit sur un.

3. Le procédé de commande du stabilisateur du camion-pompe selon la revendication 2, après l'étape de, dans un cas où la première valeur de différence est supérieure ou égale à une deuxième valeur préréglée, réglage du compte d'erreurs en cours pour qu'il soit sur un, le procédé comprenant en outre :
l'obtention d'un troisième angle d'inclinaison du camion-pompe entier à un moment en cours ;
dans un cas où le troisième angle d'inclinaison est supérieur au premier angle d'inclinaison, le réglage du compte d'erreurs en cours pour qu'il soit : une accumulation de un plus un compte d'erreurs en cours précédent ; et
dans un cas où le troisième angle d'inclinaison est inférieur ou égal au premier angle d'inclinaison, le réglage sur le fait de ne pas compter un compte d'erreurs.

4. Le procédé de commande du stabilisateur du camion-pompe selon la revendication 3, dans lequel l'étape de, dans un cas où le compte d'erreurs en cours est inférieur au compte d'erreurs admissible maximal préréglé, commande du stabilisateur pour qu'il agisse comprend en outre :
la détermination du compte d'erreurs admissible maximal préréglé,
dans lequel l'étape de détermination du compte d'erreurs admissible maximal préréglé comprend :
l'obtention d'un quatrième angle d'inclinaison du camion-pompe entier lorsque la flèche s'éloigne de sa position de support primaire, et la détermination du compte d'erreurs admissible maximal préréglé sur la base du quatrième angle d'inclinaison.

5. Le procédé de commande du stabilisateur du camion-pompe selon la revendication 4, dans lequel la détermination du compte d'erreurs admissible maximal préréglé sur la base du quatrième angle d'inclinaison comprend :
dans un cas où le quatrième angle d'inclinaison est inférieur à une quatrième valeur préréglée, le compte d'erreurs admissible maximal préréglé est réglé pour qu'il soit sur 3 ;
dans un cas où le quatrième angle d'inclinaison est supérieur ou égal à la quatrième valeur préréglée mais inférieur à une cinquième valeur préréglée, le compte d'erreurs admissible maximal préréglé est réglé pour qu'il soit sur 2 ;
dans un cas où le quatrième angle d'inclinaison est supérieur ou égal à la cinquième valeur préréglée et inférieur à une sixième valeur préréglée, le compte d'erreurs admissible maximal préréglé est réglé pour qu'il soit sur 1 ;
et dans un cas où le quatrième angle d'inclinaison est supérieur ou égal à la sixième valeur préréglée, le compte d'erreurs admissible maximal préréglé est réglé pour qu'il soit sur 0.

6. Le procédé de commande du stabilisateur du camion-pompe selon la revendication 5, dans lequel la quatrième valeur préréglée est 1 degré, la cinquième valeur préréglée est 2 degrés, et la sixième valeur préréglée est 3 degrés.

7. Le procédé de commande du stabilisateur du camion-pompe selon l'une quelconque des revendications 1 à 6, dans lequel la première valeur préréglée est 0,5 degré, lorsque le premier angle d'inclinaison est inférieur à 0,5 degré, la commande du stabilisateur pour qu'il agisse, ou, lorsque le premier angle d'inclinaison est supérieur ou égal à 0,5 degré, l'obtention du compte d'erreurs en cours, et la commande du stabilisateur pour qu'il agisse sur la base du compte d'erreurs en cours et du résultat de comparaison entre le compte d'erreurs en cours et le compte d'erreurs admissible maximal préréglé, dans lequel dans le cas où le compte d'erreurs en cours est inférieur au compte d'erreurs admissible maximal préréglé, la commande du stabilisateur pour qu'il agisse, ou, dans le cas où le compte d'erreurs en cours est supérieur ou égal au compte d'erreurs admissible maximal préréglé, la commande du stabilisateur pour qu'il s'arrête.

8. Le procédé de commande du stabilisateur du camion-pompe selon l'une quelconque des revendications 3 à 7, le procédé comprenant en outre :
dans un cas où le premier angle d'inclinaison est inférieur à la première valeur préréglée, la commande du stabilisateur pour qu'il agisse ; et
l'étape de, dans un cas où le premier angle d'inclinaison est inférieur à la première valeur préréglée, commande du stabilisateur pour qu'il agisse comprend en outre : dans un cas où le troisième angle d'inclinaison est supérieur au premier angle d'inclinaison, la commande du stabilisateur pour qu'il arrête d'agir.

9. Le procédé de commande du stabilisateur du camion-pompe selon la revendication 8, après l'étape de commande du stabilisateur pour qu'il arrête d'agir, le procédé comprenant en outre :
l'obtention d'une instruction de fonctionnement, et la commande du stabilisateur pour qu'il fonctionne selon un mode d'urgence ou un mode d'observation sur la base de l'instruction de fonctionnement.

10. Un dispositif de commande d'un stabilisateur d'un camion-pompe selon l'une quelconque des revendications 1 à 9, comprenant :
un premier module d'obtention, configuré pour obtenir le premier angle d'inclinaison du camion-pompe entier lorsque la flèche est dépliée ;
un deuxième module d'obtention, configuré pour obtenir le compte d'erreurs en cours lorsque le premier angle d'inclinaison est supérieur ou égal à la première valeur préréglée ; et
un premier module de commande, configuré pour commander le stabilisateur pour qu'il agisse sur la base du compte d'erreurs en cours et du résultat de comparaison entre le compte d'erreurs en cours et le compte d'erreurs admissible maximal préréglé, **caractérisé en ce que**, le compte d'erreurs admissible maximal préréglé est réglé selon l'angle d'inclinaison du camion-pompe entier lorsque la flèche s'éloigne de sa position de support primaire et que le capteur ne détecte momentanément pas la flèche, et le compte d'erreurs admissible maximal préréglé est différent lorsque l'angle d'inclinaison change ; et le compte d'erreurs en cours fait référence au nombre d'erreurs qui est réglé selon un angle d'inclinaison en cours du camion-pompe entier après que la flèche a été dépliée ; et
dans le cas où le compte d'erreurs en cours est inférieur au compte d'erreurs admissible maximal préréglé, la commande du stabilisateur pour qu'il agisse, ou, dans le cas où le compte d'erreurs en cours est supérieur ou égal au compte d'erreurs admissible maximal préréglé, la commande du stabilisateur pour qu'il s'arrête.

11. Un procédé de commande d'un camion-pompe, comprenant :
l'obtention d'un deuxième angle d'inclinaison d'un camion-pompe entier lorsqu'une flèche est à sa position de support primaire, et dans un cas où le deuxième angle d'inclinaison est inférieur à une troisième valeur préréglée, la commande de la flèche pour qu'elle soit dépliée ; et
avec le procédé de commande du stabilisateur du camion-pompe décrit dans l'une quelconque des revendications 1 à 9, la commande du stabilisateur pour qu'il agisse.

12. Le procédé de commande du camion-pompe selon la revendication 11, après l'étape de commande de la flèche pour qu'elle soit dépliée, le procédé comprenant en outre :
l'obtention d'un cinquième angle d'inclinaison du camion-pompe entier lorsque la flèche est dépliée ; et
le calcul d'une deuxième valeur de différence entre le cinquième angle d'inclinaison et le deuxième angle d'inclinaison, et dans un cas où la deuxième valeur de différence est supérieure à un angle de torsion, la commande de la flèche pour qu'elle arrête d'agir.
